# EUROPÄISCHE PATENTSCHRIFT

(11) **EP 3 059 777 B1**
(45) Veröffentlichungstag und Bekanntmachung des Hinweises auf die Patenterteilung: **30.08.2017**
(21) Anmeldenummer: 15155403.7
(22) Anmeldetag: 17.02.2015
(51) Int. Cl.: H01M 2/02, H01M 2/10, H01M 10/04

(54) **Batteriekasten insbesondere einer Blockbatterie**
Battery housing, in particular of a block battery
Coffre de batterie en particulier d'une batterie monobloc

(43) Veröffentlichungstag der Anmeldung: 24.08.2016
(73) Patentinhaber: HOPPECKE Batterien GmbH & Co. KG., 59929 Brilon (DE)
(72) Erfinder: Kesper, Heinrich, 34508 Willingen (DE)
(74) Vertreter: Rausch.Wanischeck.Brinkmann.Intellectual Property

(56) Entgegenhaltungen:
- JP-A- H02 306 533
- JP-A- H08 273 638
- JP-Y2- S6 238 306
- US-A- 1 670 158
- US-A1- 2004 247 995

## Beschreibung

Die Erfindung betrifft einen Batteriekasten insbesondere einer Blockbatterie zur Aufnahme einer Elektrodenplatten aufweisenden Batteriezelle, mit einem Grundkörper aus Kunststoff, der zwei einander gegenüberliegend und jeweils parallel zu den Elektrodenplatten der Batteriezelle ausgerichtete Stirnwände aufweist, wobei die Stirnwände jeweils versteift ausgebildet sind, zu welchem Zweck je Stirnwand ein Versteifungselement vorgesehen ist, das U-förmig ausgebildet ist, wobei sich die U-Schenkel jeweils an einer sich an die zugehörige Stirnwand anschließenden Seitenwand abstützen.

Batterien im Allgemeinen sowie Blockbatterien im Speziellen einerseits sowie Batteriekästen für Batterien, insbesondere Blockbatterien andererseits sind aus dem Stand der Technik an sich gut bekannt, weshalb es eines gesonderten druckschriftlichen Nachweises an dieser Stelle nicht bedarf. Es sei deshalb auch nur beispielhaft auf die US 1,670,158 A, die JP H08 273638 A, die JP H02 306533 A und die JP S62 38306 Y2 verwiesen, die jeweils einen gattungsgemäßen Batteriekasten betreffen.

Aus dem Stand der Technik vorbekannte Batteriekästen einer Blockbatterie verfügen über einen Grundkörper aus Kunststoff. Dieser Grundkörper stellt einen Volumenraum bereit, der im bestimmungsgemäßen Verwendungsfall der Aufnahme einer Batteriezelle dient. Batterien, die über eine Mehrzahl von Zellen verfügen, weisen einen Batteriekasten auf, dessen Volumenraum durch Trennwände in entsprechend viele Kompartments unterteilt ist, wobei jedes Kompartment der Aufnahme einer Batteriezelle dient.

Der Batteriekasten ist typischerweise rechteckförmig ausgebildet und verfügt über zwei Stirnwände, zwei Seitenwände sowie einen Boden. In der Regel ist der Batteriekasten im Verwendungsfall oberseitig, das heißt dem Boden gegenüberliegend unverschlossen. Alternativ kann aber auch vorgesehen sein, den Batteriekasten oberseitig mittels eines Deckels zu verschließen.

Der Grundkörper des Batteriekastens besteht aus Kunststoff, wobei bevorzugterweise Polypropylen oder Acrylnitril-Butadien-Styrol (ABS) zum Einsatz kommen.

Die Batteriezellen einer Blockbatterie sind aus separiert voneinander angeordneten Elektrodenplatten gebildet, wobei entweder die negativen oder die positiven Elektrodenplatten jeweils von einem Mikro-Glasvlies umgeben sind. Dieses Vlies dient bevorzugterweise auch als Separator. Sinn und Zweck dieses Mikro-Glasvlieses ist es, Elektrolyt zu speichern. Die Elektrodenplatten stehen also nicht im Elektrolyten sondern sie sind von einem mit Elektrolyt getränkten Vlies umgeben, was den Vorteil mit sich bringt, dass die so ausgebildete Blockbatterie lageunabhängig verwendet werden kann, das heißt auch auf der Seite liegend.

Um sicherzustellen, dass stets ein guter Kontakt zwischen den Elektrodenplatten einerseits und dem mit Elektrolyt getränkten Vlies andererseits gegeben ist, stehen die Plattenpakete einzelner Batteriezellen unter einer gewissen Vorspannung, so dass die Elektrodenplatten aneinerandergepresst werden. Dies wird dadurch erreicht, dass das fertig ausgebildete Zellenpaket zusammengedrückt und in diesem zusammengedrückten Zustand in den als Batteriegehäuse dienenden Batteriekasten beziehungsweise das entsprechende Kompartment eingesetzt wird. Die stirnseitigen Begrenzungswände, das heißt die parallel zu den Elektrodenplatten ausgerichteten Stirnwände des Batteriekastens halten das zuvor zusammengedrückte Zellenpaket in Form, stellen also für das Zellenpaket Widerlager bereit, so dass eine Ausdehnung des Zellenpakets mit dem Ergebnis unterbunden ist, dass eine sichere und dauerhaft dichte Kontaktierung der Elektrodenplatten mit dem die Elektrodenplatten umgebenden Vlies sichergestellt ist.

Kunststoff als solcher und so auch Polypropylen und ABS haftet der Nachteil an, dass er sowohl mit steigender Temperatur als auch mit zunehmender Lebensdauer an Steifigkeit verliert. In der Überlagerung von Temperatur und Lebensdauer verstärkt sich dieser Effekt noch. Insbesondere bei Batterien kommt noch hinzu, dass es bei einer Fehlbedienung der Batterie beispielsweise während des Ladens noch zu einem Überdruck innerhalb des Batteriekastens kommen kann, wodurch eine zusätzliche Belastung auf den Batteriekasten ausgeübt wird.

Die unter Krafteinwirkung stehenden Stirnwände des Batteriekastens beulen mit der Zeit aus. Dies ergibt sich dadurch, dass das Kunststoffmaterial, aus dem der Batteriekasten gebildet ist, infolge vorangeschrittener Lebensdauer und/oder Temperatureinwirkungen und/oder im Batteriekasten herrschenden Überdrucks an Steifigkeit verliert. Dies führt in nachteiliger Weise dazu, dass der Anpressdruck auf die einzelnen Batteriezellen und mithin auf die Einzellenelektrodenplatten einer Batteriezelle nachlässt, womit sich der eigentlich gewünschte innige Kontakt zwischen den Elektrodenplatten einerseits und dem die Elektrodenplatten umgebenden Vlies anderseits löst.

Das innige Anliegen des Vlieses an den Elektrodenplatten stellt sicher, dass der Elektrolyttransport durchgeführt werden kann. Ferner wird hierdurch sichergestellt, dass im Falle des Entladens frei werdender Wasserstoff und Sauerstoff intern rekombiniert werden kann. Die von den Elektrodenplatten gehaltenen aktiven Massen werden zurückgehalten, das heißt lagefixiert, so dass diese auch beim Arbeiten der Platten herausfallen können. Diese mit dem festen Anliegen des Vlieses an den Elektrodenplatten einhergehenden Effekte sind bei einem Ausbeulen der Stirnwände des Batteriekastens beeinträchtigt oder gehen sogar verloren. Im Ergebnis sinkt in nachteiliger Weise die Performance der Batterie.

Um ein solches Ausbeulen möglichst zu verhindern, ist es aus der schon vorstehend zitierten JP H08 273638 A bekannt, die Stirnwände des Batteriekastens mit einem jeweiligen Versteifungselement auszurüsten. Ein solches Versteifungselement ist U-förmig ausgebildet, wobei die U-Schenkel jeweils Ausnehmungen aufweisen, durch die hindurch batteriekastenseitige Vorsprünge greifen.

Die US 1,670,158 A offenbart einen Batteriekasten gemäß dem Oberbegriff des Anspruchs 1 aus einem Kautschuk- oder Kunststoffmaterial mit einem vollständig eingebetteten, U-förmigen Versteifungselement aus Metall. Dabei besitzt das Versteifungselement Löcher welche im gegossenen Endprodukt eine formschlüssige Verbindung ermöglicht.

Eine vergleichbare Konstruktion ist aus der JP H02 306533 A bekannt, wobei es gemäß dieser Ausführungsform bevorzugt ist, ein Versteifungselement innenseitig des Batteriekastens anzuordnen.

Die JP S62 38306 Y2 zeigt schließlich noch ein Versteifungselement, das im endmontierten Zustand am Batteriekasten ausgebildete Vertikalrippen hintergreift.

Ausgehend vom Vorbeschriebenen ist es die **Aufgabe** der Erfindung, einen Batteriekasten der eingangs genannten Art vorzuschlagen der hilft,-die Performance der Batterie auch über einen längeren Zeitraum sicher zu gewährleisten.

Zur **Lösung** dieser Aufgabe wird mit der Erfindung ein Batteriekasten mit den Merkmalen nach Anspruch 1 vorgeschlagen.

Mit der Erfindung wird vorgeschlagen, die Stirnwände zu versteifen. Einem Ausbeulen wird so entgegengewirkt, was im Ergebnis sicherstellt, dass der gewünschte innige Kontakt zwischen den Elektrodenplatten einer Batteriezelle und einem die Elektrodenplatten umgebenden Vlies aufrechterhalten bleibt, und dies dauerhaft.

Zur Versteifung der Stirnwände ist erfindungsgemäß je Stirnwand ein Versteifungselement vorgesehen. Dieses Versteifungselement ist U-förmig ausgebildet und verfügt über eine Basis, an die sich der U-förmigen Ausgestaltung des Versteifungselements entsprechend zwei U-Schenkel anschließen. Das Versteifungselement bildet aufgrund seiner U-förmigen Ausgestaltung eine Art Klammer. Diese umgreift im endmontierten Zustand die jeweils zugehörige Stirnwand, das heißt sie liegt mit ihren U-Schenkeln jeweils an einer sich an die zugehörige Stirnwand anschließenden Seitenwand an, an der sie sich abstützt.

Durch die vorbeschriebene erfindungsgemäße Konstruktion wird erreicht, dass eine Ausbeulung der zugehörigen Stirnwand unterbunden ist, da das Versteifungselement als Widerlager dient, dass im Falle einer anstehenden Ausbeulung die auf sie übertragenen Kräfte in die benachbarten Seitenwände einleitet. Diese Seitenwände werden ausschließlich auf Zug belastet, was vom Kunststoffmaterial des Batteriekastens ohne weiteres aufgenommen werden kann. In vorteilhafter Weise wird so wirkungsvoll eine ungewollte Ausbeulung der stirnseitigen Wände des Gehäusekastens unterbunden.

Es sind hinsichtlich der Ausgestaltung des U-förmigen Versteifungselements unterschiedliche Ausführungsformen möglich. Es sind bevorzugterweise je Stirnwand ein Versteifungselement vorgesehen, mithin zwei solche Elemente je Batteriekasten. Diese können gemäß einer alternativen Ausführungsform auch Teil eines Rings sein, das heißt einer Ringummantelung, die den Batteriekasten im endmontierten Zustand umlaufend umschließt.

Die Versteifungselemente können entweder von außen aufgesetzt und mit dem Batteriekasten beispielsweise verklebt sein oder als eingespritzte Teile im Inneren des den Batteriekasten bildenden Kunststoffmaterials liegen. Bevorzug ist indes eine Ausführungsform, dergemäß die Versteifungselemente von außen sichtbar sind, aber außenoberflächenbündig mit dem Gehäusekasten abschließen. Dies kann beispielsweise dadurch erreicht werden, dass die Versteifungselemente in die zur Ausbildung des Batteriekastens genutzte Spritzgussmaschine eingesetzt sind, bevor der eigentliche Spritzvorgang stattfindet.

Insgesamt wird mit der erfindungsgemäßen Ausgestaltung eine Konstruktion bereitgestellt, die ein alterungs- und/oder temperaturbedingtes Ausbeulen der aus Kunststoff bestehenden Stirnwände eines Batteriekastens insbesondere einer Blockbatterie zu unterbinden hilft. Die erfindungsgemäß vorgesehenen Versteifungselemente sorgen dafür, dass im bestimmungsgemäßen Verwendungsfall auftretende und auf die Stirnwände einwirkende Kräfte zumindest teilweise abgeleitet und in die sich an eine Stirnwand anschließenden Seitenwände eingeleitet werden. Da die auf die beiden Stirnwände eines Batteriekastens im bestimmungsgemäßen Verwendungsfall einwirkenden Kräfte gleich verteilt sind, ergibt sich je Stirnwand auch eine vergleichmäßigte Einleitung dieser Kräfte in die sich jeweils an eine Stirnwand anschließenden Seitenwände. Es findet so ein Kräfteausgleich statt, wobei die Seitenwände infolge der Krafteinleitung ausschließlich auf Zug beansprucht werden, was durch das die Seitenwände bildende Kunststoffmaterial ohne Weiteres aufgenommen werden kann.

Im Ergebnis der erfindungsgemäßen Konstruktion steht deshalb, dass auch mit voranschreitender Lebensdauer und/oder Temperatureinwirkung der damit einhergehende Verlust an Materialsteifigkeit des den Batteriekasten bildenden Kunststoffs nicht zu einem ungewollten Ausbeulen der Seitenwände des Batteriekastens führt.

Der auf die Batteriezellen einwirkende Anpressdruck bleibt damit erhalten und damit auch der innige Kontakt zwischen den Elektrodenplatten der Batteriezellen und dem sie umgebenden Vlies. Die Performance der so ausgebildeten Batterie bleibt damit sicher auch über einen längeren Zeitraum erhalten.

Gemäß einem weiteren Merkmal der Erfindung ist vorgesehen, dass das Versteifungselement ein Blech ist. Die Ausgestaltung des Versteifungselements als Blech erweist sich als in der Herstellung und der Anwendung einfach und damit kostengünstig.

Das Versteifungselement besteht gemäß einem weiteren Merkmal der Erfindung aus Metall. Bevorzugt ist Edelstahl. Dies deshalb, weil Edelstahl chemikalien- und säurebeständig, insbesondere auch elektrolytbeständig ist. Darüber hinaus ist Edelstahl optisch ansprechend, so dass auf eine Oberffächennachbehandlung, wie zum Beispiel Lackieren oder dergleichen verzichtet werden kann.

Das Versteifungselement weist gemäß einem weiteren Merkmal der Erfindung Sicken und/oder Rippen auf. Derartige Ausgestaltungen dienen insbesondere der zusätzlichen Versteifung, was insbesondere bei einer Ausgestaltung des Versteifungselements als Blech sinnvoll sein kann. Zudem kann über eine Sicken- und/oder Rippenausgestaltung der im bestimmungsgemäßen Verwendungsfall auftretende Kraftfluss in seinem Verlauf und/oder seiner Wirkrichtung beeinflusst werden.

Gemäß einem weiteren Merkmal der Erfindung ist vorgesehen, dass das Versteifungselement in eine vom Grundelement bereitgestellte Ausnehmung eingesetzt ist. Es wird so insbesondere die dem Verdrehschutz dienende Anordnung des Versteifungselements am Batteriekasten sichergestellt. Bevorzugt ist in diesem Zusammenhang eine solche Anordnung, dergemäß das Versteifungselement außenoberflächenbündig mit dem Grundkörper abschließt. Gemäß dieser Ausführungsform ist das Versteifungselement mithin vollständig von der dafür vorgesehenen Ausnehmung des Batteriekastens aufgenommen. Vorstehende Kanten des Versteifungselements werden so vermieden, was die Handhabung des Batteriekastens sowohl in der Herstellung als auch in der späteren bestimmungsgemäßen Verwendung sicherer macht.

Es ist gemäß einem weiteren Merkmal der Erfindung vorgesehen, dass das Versteifungselement gegenüber der Wand und/oder den sich daran anschließenden Seitenwänden formschlüssig festgelegt ist. Der Formschluss dient im bestimmungsgemäßen Verwendungsfall der schon vorerläuterten Krafteinleitung in die Seitenwände. Gegenüber einem Stoffschluss und/oder einem Kraftschluss hat sich insbesondere der Formschluss als vorteilhaft herausgestellt, weil er produktionstechnisch vergleichsweise einfach und damit kostengünstig zu realisieren ist. Darüber hinaus bietet der Formschluss den Vorteil, dass das Versteifungselement lagesicher und dauerhaft am Batteriekasten gehalten ist.

Zur Ausbildung eines Formschlusses verfügt das Versteifungselement erfindungsgemäß über Durchbrüche, in bevorzugter Weise Einprägungen und/oder Vertiefungen. Das Versteifungselement wird bei der Herstellung des Batteriekastens teilweise von dem den Batteriekasten bildenden Kunststoffmaterial umspritzt, infolge dessen es in die vom Versteifungselement bereitgestellten Durchbrüche, Einprägungen und/oder Vertiefungen Kunststoffmaterial eindringt. Es wird auf diese Weise der vorbeschriebene Formschluss durch insbesondere Hinterschnitt bereitgestellt.

Gemäß einem weiteren Merkmal der Erfindung ist vorgesehen, dass das Versteifungselement in den Grundköper eingebettet ist.

Weitere Merkmale und Vorteile der Erfindung ergeben sich aus der nachfolgenden Beschreibung anhand der Figuren. Dabei zeigen
- Fig. 1: in schematisch perspektivischer Darstellung einen Batteriekasten nach der Erfindung;
- Fig. 2: in schematischer Perspektivansicht ein erfindungsgemäßes Versteifungselement;

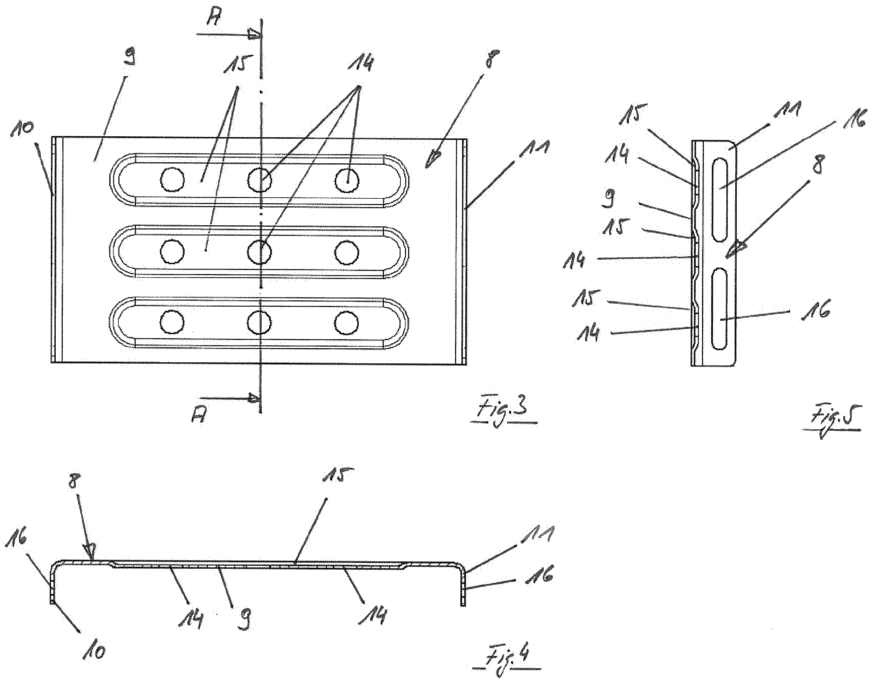

- Fig. 3: in einer Draufsicht von unten das erfindungsgemäße Versteifungselement;
- Fig. 4: das Versteifungselement nach Fig. 3 in einer Seitenansicht und
- Fig. 5: das Versteifungselement nach Fig. 3 in geschnittener Seitenansicht gemäß Schnittlinie A-A nach Fig. 3.

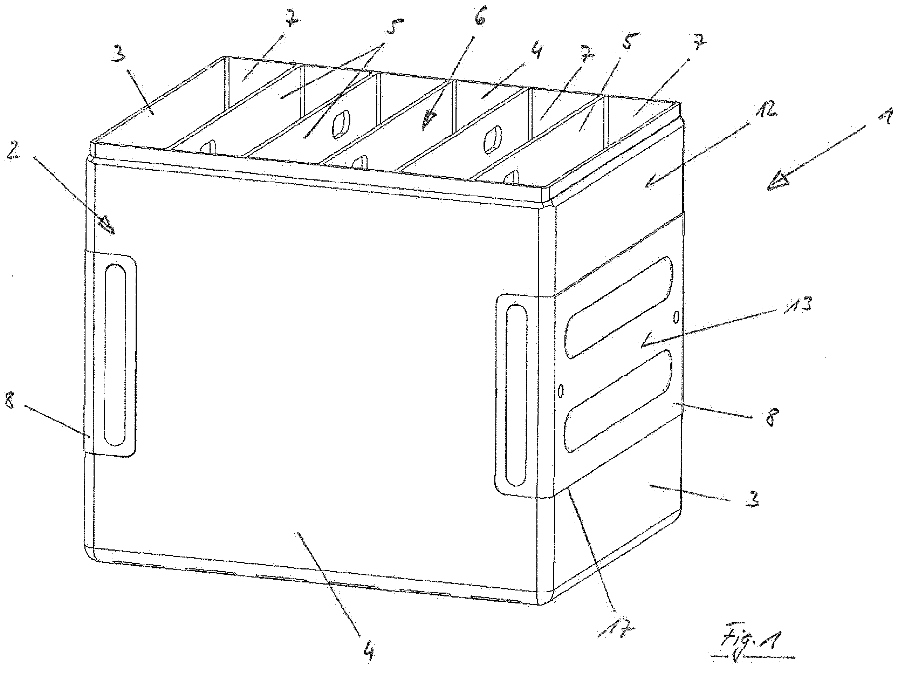

Figur 1 lässt in schematisch perspektivischer Darstellung einen Batteriekasten 1 nach der Erfindung erkennen. Dieser verfügt über einen Grundkörper 2, der seinerseits zwei Stirnwände 3, zwei Seitenwände 4 und einen in der Figur aufgrund der perspektivischen Darstellung nicht erkennbaren Boden aufweist.

Vom Grundkörper 2 des Batteriekastens 1 wird ein Volumenraum 6 bereitgestellt, der im bestimmungsgemäßen Verwendungsfall der Aufnahme von in den Figuren nicht näher dargestellten Batteriezellen dient. Dabei verfügt die Ausführungsform nach Figur 1 über einen zur Aufnahme mehrerer Batteriezellen geeigneten Volumenraum 6, weshalb dieser durch Trennwände 5 in einzelne Kompartments 7 unterteilt ist, wobei ein Kompartment 7 jeweils zur Aufnahme einer Batteriezelle dient.

Der Grundkörper 2 ist als einstückiges Spitzgussteil aus Kunststoff gebildet und besteht beispielsweise aus Polypropylen oder ABS.

Der Batteriekasten 1 verfügt erfindungsgemäß über versteift ausgebildete Stirnwände 3. Erfindungsgemäß ist zu diesem Zweck je Stirnwand 3 ein Versteifungselement 8 vorgesehen. Dieses ist als Blech ausgebildet und besteht aus Edelstahl.

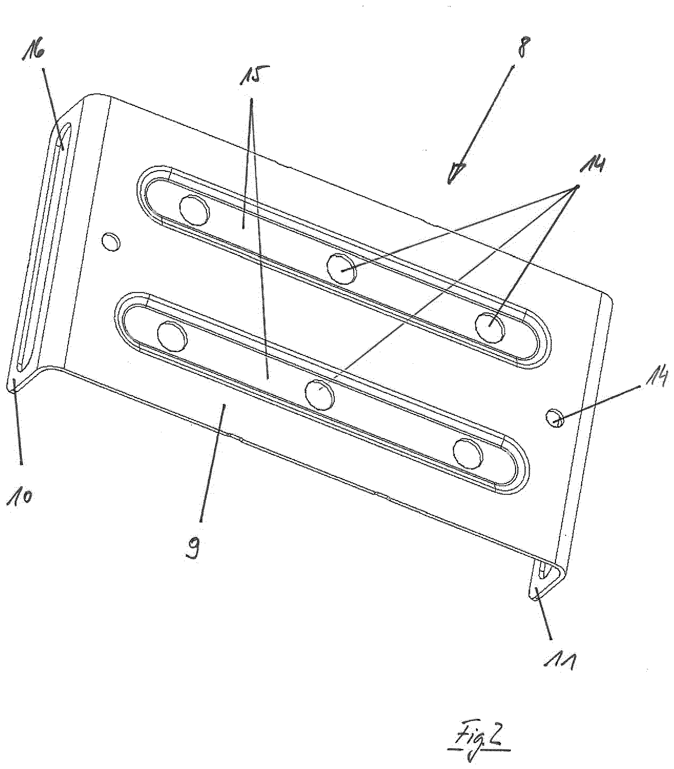

Wie insbesondere Fig. 2 anhand einer ersten Ausführungsform des Versteifungselements 8 erkennen lässt, ist dieses U-förmig ausgebildet. Es verfügt über eine Basisplatte 9, an die sich der U-förmigen Ausgestaltung des Versteifungselements 8 entsprechend zwei Schenkel 10 und 11, d.h. zwei U-Schenkel anschließen. Im endmontierten Zustand, wie er in Figur 1 gezeigt ist, stützen sich diese U-Schenkel 10 und 11 jeweils an einer sich an die zugehörige Stirnwand 3 anschließenden Seitenwand 4 ab.

Wie Figur 1 ferner erkennen lässt, ist ein Versteifungselement 8 in eine zugehörige Ausnehmung 17 eingesetzt. Dabei ist die Ausnehmungstiefe in Entsprechung der Materialstärke des als Blech ausgebildeten Versteifungselements 8 gewählt, so dass im endmontierten Zustand eine außenoberflächenbündige Ausgestaltung steht. Demnach fluchten die Außenoberfläche 12 der zugehörigen Stirnwand 3 und die Außenoberfläche 13 des in die Ausnehmung 17 eingesetzten Versteifungselements 8.

Das Versteifungselement 8 verfügt, wie dies insbesondere die Darstellung nach Figur 2 erkennen lässt, über Durchbrüche 14 und 16 sowie über Sicken 15. Die Sicken 15 dienen der zusätzlichen Aussteifung des Versteifungselements 8. Im gezeigten Ausführungsbeispiel nach Figur 2 sind diese Sicken 15 als langlochförmige Einprägungen ausgebildet. Alternativ können auch kreisrundförmige Ausprägungen 15 vorgesehen sein.

Die Versteifungselemente 8 werden zur Herstellung des Batteriekastens 1 in das Spritzgusswerkzeug eingelegt und von dem den Batteriekasten bildenden Kunststoffmaterial umspritzt. Im Ergebnis dieser Herstellung greift das Kunststoffmaterial einen Hinterschnitt ausbildend sowohl in die vom Versteifungselement 8 bereitgestellten Sicken 15 als auch in die vom Versteifungselement 8 bereitgestellten Durchbrüche 14 und 16 ein, wie dies insbesondere Figur 1 erkennen lässt. Aufgrund dieser Ausgestaltung ergibt sich ein Formschluss zwischen dem jeweiligen Versteifungselement 8 und dem Batteriekasten 1 beziehungsweise dem vom Batteriekasten 1 bereitgestellten Grundkörper 2. Durch diesen Formschluss kann eine sichere Krafteinleitung insbesondere in die sich an eine Stirnwand 3 anschließende Seitenwände 4 erfolgen.

Mit dem erfindungsgemäß vorgesehenen Versteifungselement 8 ist sichergestellt, dass eine Ausbeulung der jeweils zugehörigen Stirnwand 3 des Grundkörpers 2 sicher unterbunden ist. Die vom Batteriekasten 1 aufgenommenen Batteriezellen bleiben so lagesicher positioniert und die von den Batteriezellen jeweils bereitgestellten Elektrodenplatten bleiben mit dem sie umgebenden Vlies in einem innigen Kontakt, so dass ein bestimmungsgemäßer Betrieb einer mit einem erfindungsgemäßen Batteriekasten 1 ausgerüsteten Batterie auch auf Dauer sicher möglich ist, und zwar insbesondere unabhängig von einer temperatur- und/oder altersbedingten Verringerung der Steifigkeit des den Grundkörper 2 des Batteriekastens 1 bildenden Kunststoffmaterials.

### Bezugszeichenliste

- 1: Batteriekasten
- 2: Grundkörper
- 3: Stirnwand
- 4: Seitenwände
- 5: Trennwände
- 6: Volumenraum
- 7: Kompartment
- 8: Versteifungselement
- 9: Basisplatte
- 10: Schenkel
- 11: Schenkel
- 12: Außenoberfläche
- 13: Außenoberfläche
- 14: Durchbruch
- 15: Sicken
- 16: Durchbruch
- 17: Ausnehmung

## Patentansprüche

1. Batteriekasten insbesondere einer Blockbatterie zur Aufnahme einer Elektrodenplatten aufweisenden Batteriezelle, mit einem Grundkörper (2) aus Kunststoff, der zwei einander gegenüberliegend und jeweils parallel zu den Elektrodenplatten der Batteriezelle ausgerichtete Stirnwände (3) aufweist, wobei die Stirnwände (3) jeweils versteift ausgebildet sind, zu welchem Zweck je Stirnwand (3) ein Versteifungselement (8) vorgesehen ist, das U-förmig ausgebildet ist, wobei sich die U-Schenkel (10, 11) jeweils an einer sich an die zugehörige Stirnwand (3) anschließenden Seitenwand (4) abstützen, wobei das Versteifungselement (8) in eine vom Grundkörper (2) bereitgestellte Ausnehmung (17) vollständig eingesetzt ist, und dass das Versteifungselement (8) gegenüber der jeweiligen Stirnwand (3) und den sich daran anschließenden Seitenwänden (4) formschlüssig festgelegt ist, zu welchem Zweck das Versteifungselement (8) Durchbrüche (14, 16) aufweist, **dadurch gekennzeichnet dass** das Versteifungselement (8) vom Kunststoff des Grundkörpers teilweise umspritzt und in den Grundkörper eingebettet ist und dass eine zusätzliche Versteifung des Versteifungselements (8) vorgesehen ist, zu welchem Zweck das Versteifungselement (8) Sicken (15) aufweist.

2. Batteriekasten nach Anspruch 1, **dadurch gekennzeichnet, dass** das Versteifungselement (8) ein Blech ist.

3. Batteriekasten nach Anspruch 1 oder 2, **dadurch gekennzeichnet, dass** das Versteifungselement (8) aus Metall, insbesondere Edelstahl gebildet ist.

4. Batteriekasten nach einem der vorhergehenden Ansprüche, **dadurch gekennzeichnet, dass** das Versteifungselement (8) mit dem Grundkörper (2) verklebt ist.

## Claims

1. A battery box of especially a monobloc battery for receiving a battery cell comprising electrode plates, comprising a base body (2) made of plastic which comprises two front walls (3) located opposite each other and respectively oriented in parallel to the electrode plates of the battery cell, wherein the front walls (3) are respectively designed in a reinforced manner, for which purpose a stiffening element (8) is provided for each front wall (3), which stiffening element is U-shaped, wherein the U-legs (10, 11) respectively rest against a side wall (4) which is connected to the associated front wall (3), wherein the stiffening element (8) is completely inserted into a recess (17) provided by the base body (2), and that the stiffening element (8) is fixed in a positive-locking manner with respect to the respective front wall (3) and the side walls (4) connected thereto, for which purpose the stiffening element (8) comprises breakthroughs (14, 16), **characterized in that** the stiffening element (8) is partially extrusion-coated with the plastic of the base body and is embedded in the base body and that an additional reinforcement of the stiffening element (8) is provided, for which purpose the stiffening element (8) comprises corrugations (15).

2. A battery box according to claim 1, **characterized in that** the stiffening element (8) is a sheet metal.

3. A battery box according to claim 1 or 2, **characterized in that** the stiffening element (8) is made of metal, in particular stainless steel.

4. A battery box according to one of the preceding claims, **characterized in that** the stiffening element (8) is glued with the base body (2).

## Revendications

1. Boîtier de batterie, notamment d'une batterie monobloc, pour recevoir une cellule de batterie comprenant des plaques d'électrodes, comprenant un corps de base (2) en plastique, qui comprend deux parois frontales (3) disposées en vis-à-vis l'une de l'autre et chacune orientée parallèlement aux plaques d'électrodes de la cellule de batterie, les parois frontales (3) étant chacune conçues de manière raidie, à quelle fin un élément de rigidification (8) est prévu pour chaque paroi frontale (3), lequel élément de rigidification (8) est en forme de U, les branches de U (10, 11) s'appuyant chacune sur une paroi latérale (4), qui se raccorde à la paroi frontale (3) associée, l'élément de rigidification (8) étant complètement inséré dans un évidement (17) fourni par le corps de base (2), et que l'élément de rigidification (8) est fixé par concordance de formes par rapport à la paroi frontale (3) respective et aux parois latérales (4), qui se raccordent à celle-ci, à quelle fin l'élément de rigidification (8) comprend des percées (14, 16), **caractérisé en ce que** l'élément de rigidification (8) est partiellement enrobé par injection de la plastique du corps de base et est incorporé dans le corps de base, et qu'un renforcement supplémentaire de l'élément de rigidification (8) est prévu, à quelle fin l'élément de rigidification (8) comprend des moulures (15).

2. Boîtier de batterie selon la revendication 1, **caractérisé en ce que** l'élément de rigidification (8) est une tôle.

3. Boîtier de batterie selon la revendication 1 ou la revendication 2, **caractérisé en ce que** l'élément de rigidification (8) est fabriqué en métal, notamment en acier inoxydable.

4. Boîtier de batterie selon l'une des revendications précédentes, **caractérisé en ce que** l'élément de rigidification (8) est collé avec le corps de base (2).
